# EUROPÄISCHE PATENTSCHRIFT

(11) **EP 4 609 092 B1**
(45) Veröffentlichungstag und Bekanntmachung des Hinweises auf die Patenterteilung: **13.05.2026**
(21) Anmeldenummer: 23786066.3
(22) Anmeldetag: 06.10.2023
(51) Int. Cl.: F16H 61/28, F16H 63/18, F16H 61/00

(54) **VERFAHREN ZUR POSITIONSBESTIMMUNG EINER SCHALTWALZE**
METHOD FOR DETERMINING THE POSITION OF A GEAR SHIFT DRUM
PROCÉDÉ DE DÉTERMINATION DE LA POSITION D'UN TAMBOUR DE CHANGEMENT DE VITESSE

(30) Priorität: 25.10.2022 DE 102022211318
(43) Veröffentlichungstag der Anmeldung: 03.09.2025
(73) Patentinhaber: Magna PT B.V. & Co. KGaA, 74199 Untergruppenbach (DE)
(72) Erfinder: DIGA, Simon-Martin, 40472 Duesseldorf (DE); KREIS, Oliver, 74219 Moeckmuehl (DE)
(74) Vertreter: Reuter, Silke Beatrix
(86) Internationale Anmeldenummer: PCT/EP2023/077761
(87) Internationale Veröffentlichungsnummer: WO 2024/088730

(56) Entgegenhaltungen:
- EP-A1- 3 770 467
- DE-A1- 102010 013 962
- DE-A1- 102013 100 213
- DE-A1- 102015 217 858
- DE-A1- 19 914 394

## Beschreibung

Die Erfindung betrifft ein Verfahren zur Positionsbestimmung einer sich drehenden Schaltwalze über Mittel, die an einer antreibenden elektrischen Maschine Strom-oder Spannungsabweichungen erzeugen, wobei die elektrische Maschine an der Schaltwalze angreift und dazu eingerichtet ist die Schaltwalze um 360 Grad zu drehen und die Mittel über den Außenumfang oder der Stirnseite der Schaltwalze verteilt angeordnet sind.

### Stand der Technik

Der Verfahrweg einer Schaltwalze wird durch gehäusefeste mechanische Endanschläge begrenzt. Die Schaltwalzenposition kann durch das Anfahren beider Endanschläge und der Kontrolle der errechneten Bahnlänge eindeutig referenziert und damit auch eingelernt werden. Dieser Vorgang kann über die Lebensdauer des Getriebes zyklisch wiederholt und garantiert gleichbleibende Genauigkeiten.

Sollten diese Endanschläge wegfallen, ist ein Einlernen auf der genannten Art und Weise nicht mehr möglich. Bei einer "360°-Schaltwalze" fallen die Endanschläge weg, damit die Schaltwalze aus beiden Richtungen eine beliebige Position anfahren kann.

Eine Lösung besteht aus einem Positionssensor an der Schaltwalze, welcher die absolute Position an ein Steuergerät meldet. Ein Einlernen ist dann nicht mehr notwendig.

Ein zusätzlicher Sensor bedeutet aber immer gleich unerwünschte zusätzliche Bauteilkosten durch den Sensor selbst und die Verkabelung.

Darüber hinaus sind die Anforderungen bzgl. Genauigkeit und Robustheit sehr hoch. Die Schaltwalzen-Position, und damit auch automatisch die Genauigkeit des Sensors, ist elementar wichtig für bestimmte Getriebeaufgaben wie Schaltungen und Parksperrenfunktionen. Diese Genauigkeit muss zudem über das gesamte Getriebeleben gleich hoch bleiben.

Ein Verfahren mit analoge Ankerstromsignal und dessen Auswertung ist beispielsweise aus der DE 195 11 307 C1 bekannt. Damit das Ankerstromsignal überlagernde Störimpulse nicht mit in die Auswertung einer Stromrippelzählung gelangen, wird üblicherweise das analoge Ankerstromsignal vor seiner Digitalisierung entsprechend aufbereitet, beispielsweise einer Frequenzfilterung unterzogen. Diese Maßnahmen dienen dazu, ein möglichst Störimpuls freies Stromrippelsignal der Digitalisierung und anschließenden Zählauswertung zuführen zu können. Als Störimpulse sind in diesem Zusammenhang nicht Kommutator bedingte Impulse angesprochen, die das Ankerstromsignal überlagern.

Aus der EP 1 208 638 B1 ist ein Verfahren bekannt, das sich insbesondere zum Einsatz im Rahmen einer Positionserkennung einer Verstelleinrichtung zum Öffnen und Schließen einer Fensterscheibe, eines Schiebedaches oder zum Verstellen eines Sitzes in einem Kraftfahrzeug eignet. Eine Positionsbestimmung, beispielsweise der Scheibe kann dann mit hinreichender Genauigkeit allein durch Auswerten des Stromrippelsignals ohne einen Einsatz zusätzlicher Sensoren durchgeführt werden. Bei einem solchen Einsatz ist es jedoch erforderlich, den Referenzstromrippel bereits beim Motoranlauf und somit vor einer Bewegung des Fensters zu ermitteln, damit gleichzeitig mit der Bewegung die gewünschte Korrektur durchgeführt werden kann, ohne dass das gesamte Stromrippelsignal zunächst gespeichert und nach Beendigung der durchgeführten Bewegung hinsichtlich einer Positionsbestimmung des angetriebenen Elements korrigiert werden muss.

Die DE 10 2013 100 213 A1 zeigt ein Verfahren zum Anpassen von Getriebesteuerelementen zum genauen Lokalisieren von Synchronisations-Berührungspunkten. Durch Drehen einer Schalttrommel betätigt eine Schaltgabel die Synchronisierer, während sie an jedem vorbeiläuft. Es erfolgt eine Messung, des übertragenen Drehmoments, wobei der gemessene Strom der Rückkopplung der Aktuatoren bestimmt wird.

Die DE 10 2010 013 962 A1 zeigt ein Verfahren zum Erkennen von Blockade Ereignissen. Dabei werden Positionssensoren für die Position der Schaltwalze verwendet.

Aus der DE 199 14 394 A1 ist ein Verfahren zur Positionsbestimmung einer sich drehenden Schaltwalze über Mittel, die an der antreibenden elektrischen Maschine Strom- oder Spannungsabweichungen erzeugen, bekannt.

Die EP 3 770 467 A1 offenbart ein Verfahren zur Kalibrierung mindestens einer drehbaren Schaltwalze in einem Antriebsstrang eines Kraftfahrzeugs.

Es ist Aufgabe der Erfindung eine Positionsbestimmung einer Schaltwalze zur Verfügung zu stellen, die unabhängig von Anschlägen und Sensoren auf der Basis von Stromspitzen arbeitet.

### Beschreibung der Erfindung

Die Aufgabe wird gelöst mit einem Verfahren nach Anspruch 1, hier ein Verfahren zur Positionsbestimmung einer sich drehenden Schaltwalze über Mittel, die an der antreibenden elektrischen Maschine Strom- oder Spannungsabweichungen erzeugen, wobei die elektrische Maschine an der Schaltwalze angreift und dazu eingerichtet ist die Schaltwalze um 360 Grad zu drehen, wobei die Mittel über den Außenumfang oder der Stirnseite der Schaltwalze verteilt angeordnet sind, und wobei die Mittel einen mechanischen Widerstand bei der Drehung der Schaltwalze erzeugen, und wobei die Auswertung der gemessenen Strom- oder Spannungsabweichungen über eine Mustererkennung erfolgt.

Bei der Erfindung wird auf den Einsatz eines zusätzlichen Positionssensors für die Schaltwalze verzichtet. Das Referenzieren findet allein über eine Mustererkennung im Strom- oder Spannungssignal des Schaltwalzenmotors statt.

Das Stromsignal, das kontinuierlich als Strom über die Zeit verläuft, ist bereits in einen Controller als Messgröße vorhanden und kann somit ohne Weiteres verwendet werden.

Durch die erfindungsgemäße Lösung erfolgt eine Verbesserung der Funktion der Schaltwalzenbestimmung, ein höherer Schaltkomfort, reduzierter Verschleiß durch sichere Bestimmung der Schaltwalzenposition, sowie eine Kosten- und Energieeinsparung und damit auch einer CO2-Minderung.

Die Kosteneinsparung erfolgt durch den Wegfall eines zusätzlichen Sensors.

Es ist von Vorteil, dass die Mustererkennung durch Drehung der Schaltwalze und Messung an der elektrischen Maschine erfolgt, so dass Eingangsgrößen, die im Stillstand eines Fahrzeugs zur Verfügung stehen, eingelernt werden. Ein zuvor definierter und zur Schaltwalzenposition bekannter Stromverlauf wird über die Mustererkennung, während der Schaltwalzenbewegung erkannt und lässt so einen Rückschluss auf die Schaltwalzenposition zu.

Die Mustererkennung wird gemäß der vorliegenden Erfindung durch ein neuronales Netz dargestellt. Neuronale Netze haben den Vorteil, dass sie, wenn sie richtig trainiert wurden, bei verrauschten Daten oder Störungen in den Eingabemustern meist weniger empfindlich reagieren als konventionelle Algorithmen.

Es ist von Vorteil, dass die Mustererkennung kontinuierlich während des Betriebs die Schaltwalzenpositionsbestimmung optimiert. Die Auswertung des Strom-ZeitSignales auf Basis der Mustererkennung kann im normalen Regelbetrieb mitlaufen und dadurch fortlaufend die Positionsgenauigkeit überprüfen. Eine Positionsbestimmung mittels Endanschlägen läuft hingegen nur in ganz bestimmten Situationen.

Die Auswertung der gemessenen Eingangsgrößen erfolgt nach der Messung in einen Zeitabschnitt der Vergangenheit und somit niemals in Echtzeit.

Die Mustererkennung kann weitere charakteristische Verläufe im Strom-Zeit-Signal hinzunehmen und erhöht damit fortlaufend die Genauigkeit.

Die Mustererkennung kann selbst lernen und erkennt verschleißbedingte Veränderungen im Strom-Zeit-Signal und erhöht damit die Robustheit.

Vorteilhafterweise sind Mittel vorhanden, die an der antreibenden elektrischen Maschine Strom- oder Spannungsabweichungen erzeugen, wobei mindestens ein Druckmittel vorhanden ist, das über eine Federspannung eine Kugel in Bohrungen der Stirnseite oder des Außenumfangs der Schaltwalze drückt.

### Beschreibung der Figuren

Figur 1 zeigt eine Schaltwalzenanordnung,
Figur 2 zeigt ein Ablaufdiagramm,
Figur 3 zeigt eine beispielhafte Mustererkennung.

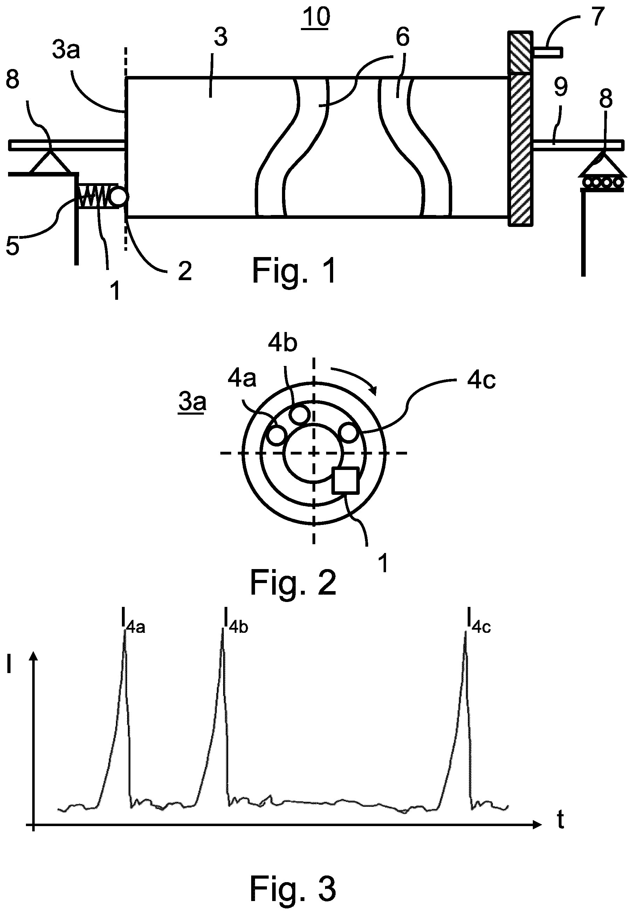

Für die Erfindung ist ein zuvor definiertes Muster im Stromsignal der Schaltwalze zu erreichen. Dabei gibt es viele Möglichkeiten. Gemäß der vorliegenden Erfindung wird ein Stromanstieg durch einen mechanischen Widerstand im Verfahrweg einer Schaltwalze erreicht. Der mechanische Widerstand kann künstlich durch Bauteilveränderungen erzeugt werden oder im System selber liegen, wie bei einer Überdrückeinheit, z.B. an der Parksperre. Als Beispiel wird für die vorliegende Erfindung ein künstlicher Widerstand in das Schaltwalzensystem eingebaut, wie in Figur 1 dargestellt.

Das Verfahren setzt dabei auf eine Art der Rastierung in der Schaltwalzenanordnung 10. Eine Schaltwalze 3 weist Führungsnuten 6 auf, die sich um den Umfang der Schaltwalze erstrecken und zur Führung von Schaltgabeln dienen. Ein elektrischer Antrieb, eine elektrische Maschine 7, greift an der Schaltwalze an und dreht die Schaltwalze um 360 Grad. Die Achse 9 der Schaltwalze 3 ist exemplarisch über Lager 8 an einem Gehäuse gelagert.

In der Figur 1 wird für die Rastierung ein federndes Druckstück 1 mit einer Kugel 2 verwendet, welches die Schaltwalze 3 durch an der Stirnseite 3a angebrachte Bohrung 4 beim Vorbeifahren durch das Reinrutschen der Kugel 2 in die Bohrung 4 fixiert. Für das Weiterdrehen der Schaltwalze 3 wird initial eine höhere Kraft benötigt, um die Feder 5 des Druckstücks erneut zu spannen.

In Figur 2 ist eine Aufsicht auf die Stirnseite 3a der Schaltwalze 3 gezeigt, wobei die Bohrungen 4a, 4b, 4c dargestellt sind, sowie das Druckstück 1. Wie zu erkennen ist, liegen die Bohrungen in unterschiedlichen Abständen zueinander auf einer Kreislinie der Stirnseite 3a, so dass das Druckstück 1 über die Drehung der Schaltwalze 3 nach und nach in jede der Bohrungen 4 einrastet.

Die erhöhte Kraft des Einrastens und Herausdrückens der Kugeln 2 lässt sich messtechnisch in einer Erhöhung des Schaltwalzenstroms I, welcher an der Schaltwalze bereits erfasst wird, erkennen, siehe Figur 3.

Figur 3 zeigt den Schaltwalzenstrom I über der Zeit. Die Stromspitzen Imax sind klar zu erkennen und den jeweiligen Bohrungen 4a, 4b und 4c zugeordnet.

Mit dem Wissen über die genaue Ausprägung dieses Stromanstieges delta I kann beim Umlaufen der 360° Schaltwalze die Position durch die Mustererkennung bestimmt werden. Um Fehlinterpretationen zu minimieren, werden drei Rastierungen oder auch mehr verbaut.

Die Positionsbestimmung wird vor dem Einsatz des Fahrzeugs eingelernt, wobei während des Betriebs immer eine Verfeinerung der Positionsbestimmung erfolgt.

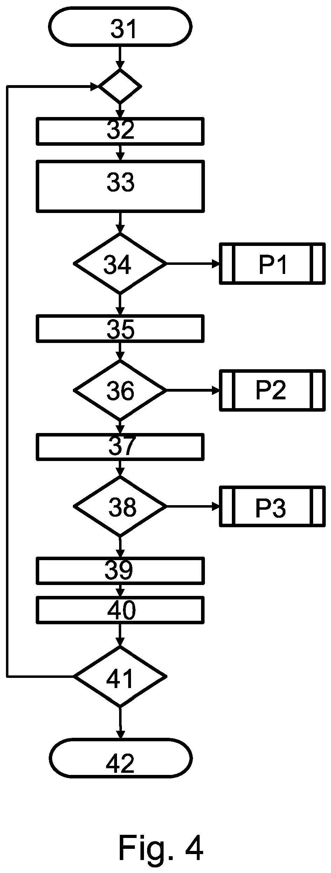

Das Verfahren zum Einlernen der Schaltwalzenposition ist im Ablauf der Figur 4 zu sehen.

Das Verfahren beginnt bei 31 mit dem Start des Einlernens. In einem ersten Schritt 32 wird in der Software die bisher bekannte Position gelöscht.

Schritt 33 betrifft die Bewegung, Drehung der Schaltwalze in eine vorbestimmte Richtung mit vorgegebener Geschwindigkeit.

Bei der Erkennung einer ersten Bohrung wird die Position P1, z. B. an der Stromspitze I₄ₐ, gespeichert und im Schritt 35 die Schaltwalze weitergedreht.

Im Schritt 36 wird die zweite Position P2 bestimmt und abgespeichert.

Schritt 37 dreht die die Schaltwalze auf die Position P3, die abgespeichert wird.

Nach dem Abspeichern der drei beispielhaften Positionen wird die Drehung der Schaltwalze 3 in Schritt 39 gestoppt. Im Schritt 40 wird die Position verifiziert und im Schritt 41 ein Plausibilitätsüberprüfung durchgeführt.

Dabei wird die Positionsbestimmung mit Werten, die fest hinterlegt sind verglichen und abgestimmt. Die Werte sind durch das anzusteuernde Getriebe, die Kupplungen usw. vorgegeben und variieren je nach Getriebedesign.

Wenn alles in Ordnung ist, endet das Verfahren in Schritt 42. Ansonsten springt das Verfahren zurück an den Anfang.

Die Rastierung kann von beliebiger Art sein. Es kann eine Kugel/Bohrung, eine Ovalität in einem sich drehenden Bauteil oder eine andere Art der Hemmung oder des Widerstands sein. Hier sind viele Ausführungsformen denkbar. Auch die Häufigkeit der Rastierung kann zusätzlich variiert werden. Wenn mehrere Gruppen der Rastierung über die 360° verteilt sind, kann auch durch geringe Rotation -nicht die vollen 360°- bereits eine Referenzierung erfolgen.

Die Mustererkennung selbst lässt sich mit Hilfe unterschiedlicher Algorithmen umsetzen. Es wird erfindungsgemäß ein neuronales Netz 21 verwendet.

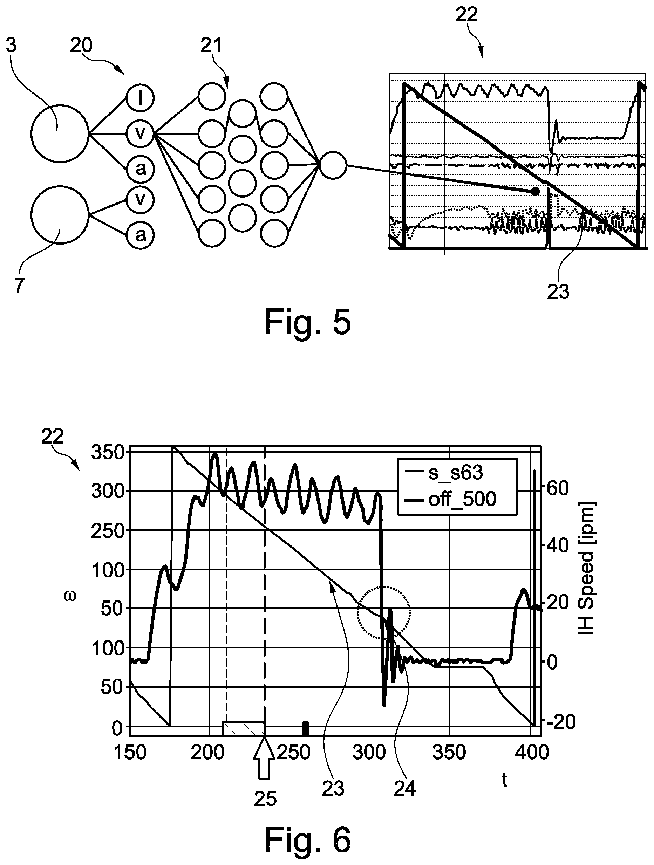

Ein Ausführungsbeispiel wird in den Figuren 5 und 6 dargestellt.

Als Eingangsgröße 20 der Mustererkennung sind die Ergebnisse an der Schaltwalze 3 selbst dargestellt. Dabei wird der Schaltwalzenstrom I, die Drehgeschwindigkeit v und die Drehbeschleunigung a der Schaltwalze 3 verwendet.

Als weitere Eingangsgrößen werden Werte der elektrischen Maschine 7 des Antriebs, ebenfalls die Drehzahlgeschwindigkeit an der elektrischen Maschine 7, sowie die Beschleunigung der Welle der elektrischen Maschine 7 verwendet.

Das neuronale Netz 21 stellt die Verarbeitung der Eingangsdaten einer Mustererkennung dar. Die Darstellung der Eingangsdaten für das neuronale Netz findet sich in dem Graphen 22, in der verschiedene Eingangsgrößen dargestellt sind.

Die Figur 6 zeigt den Graphen 22 nochmal vergrößert. Es ist die Schaltwalzendrehposition 23 mit dem Winkel ω über der Zeit t aufgetragen.

In diesem Ausführungsbeispiel dreht sich die Schaltwalze um 360°. Am Punkt 24 der Schaltwalzenbewegung ist eine Schulter im Verlauf zu erkennen, die messtechnisch als Stromspitze erfasst wird.

Die Mustererkennung versucht aus den Positionen der Stromrippel die Position der Schaltwalze zu bestimmen. Zu jedem Zeitpunkt, z. B. zum Zeitpunkt 25, wird eine definierte Zeitspanne in die Vergangenheit betrachtet. Es wird nach eindeutigen Mustern gesucht, die einen Rückschluss auf den aktuellen Positionswert schließen lassen. Die Mustererkennung ergibt keinen Referenzwert in Echtzeit.

## Patentansprüche

1. Verfahren zur Positionsbestimmung einer sich drehenden Schaltwalze (3) über Mittel, die an einer antreibenden elektrischen Maschine (7) Strom- oder Spannungsabweichungen erzeugen, wobei die elektrische Maschine (7) an der Schaltwalze (3) angreift und dazu eingerichtet ist die Schaltwalze (3) um 360 Grad zu drehen, **dadurch gekennzeichnet, dass** die Mittel über den Außenumfang oder der Stirnseite (3a) der Schaltwalze (3) verteilt angeordnet sind, und wobei die Mittel einen mechanischen Widerstand bei der Drehung der Schaltwalze (3) erzeugen, und wobei die Auswertung der gemessenen Strom- oder Spannungsabweichungen über eine Mustererkennung (21) durch ein neuronales Netz (21) erfolgt.

2. Verfahren nach Anspruch 1, **dadurch gekennzeichnet, dass** die Mustererkennung durch Drehung der Schaltwalze (3) und Messung an der elektrischen Maschine (7) eingelernt wird, wobei Eingangsgrößen, die im Stillstand eines Fahrzeugs erhoben werden, verwendet werden.

3. Verfahren nach einem der vorhergehenden Ansprüche, **dadurch gekennzeichnet, dass** die Mustererkennung kontinuierlich während des Betriebs die Schaltwalzenpositionsbestimmung optimiert.

4. Verfahren nach einem der vorhergehenden Ansprüche, **dadurch gekennzeichnet, dass** die Auswertung der gemessenen Eingangsgrößen nach der Messung in einem Zeitabschnitt der Vergangenheit erfolgt.

5. Verfahren nach einem der vorhergehenden Ansprüche, **dadurch gekennzeichnet, dass** die Mittel, die an der antreibenden elektrischen Maschine (7) Strom- oder Spannungsabweichungen erzeugen, mindestens ein Druckmittel ist, das über eine Federspannung eine Kugel (2) in Bohrungen (4) der Stirnseite (3a) oder des Außenumfangs der Schaltwalze (3) drückt.

## Claims

1. Method for determining the position of a rotating gear shift drum (3) using means which generate current or voltage deviations on a driving electric machine (7), wherein the electric machine (7) acts on the gear shift drum (3) and is configured to rotate the gear shift drum (3) through 360 degrees, **characterized in that** the means are arranged so as to be distributed over the outer circumference or the end face (3a) of the gear shift drum (3), and wherein the means generate a mechanical resistance during the rotation of the gear shift drum (3), and wherein the measured current or voltage deviations are evaluated via pattern recognition (21) by a neural network (21).

2. Method according to Claim 1, **characterized in that** the pattern recognition is learned by rotation of the gear shift drum (3) and measurement on the electric machine (7), wherein input variables that are collected when a vehicle is at a standstill are used.

3. Method according to one of the preceding claims, **characterized in that** the pattern recognition continuously optimizes the gear shift drum position determination during operation.

4. Method according to one of the preceding claims, **characterized in that** the measured input variables are evaluated out after the measurement in a time period in the past.

5. Method according to one of the preceding claims, **characterized in that** the means which generate current or voltage deviations at the driving electric machine (7) is at least one pressure-exerting means which presses a ball (2) into bores (4) of the end face (3a) or of the outer circumference of the gear shift drum (3) via spring tension.

## Revendications

1. Procédé de détermination de la position d'un tambour de changement de vitesse (3) rotatif à l'aide de moyens qui génèrent des écarts de courant ou de tension sur une machine électrique (7) d'entraînement, la machine électrique (7) venant en prise avec le tambour de changement de vitesse (3) et étant configurée pour faire tourner le tambour de changement de vitesse (3) de 360 degrés, **caractérisé en ce que** les moyens sont répartis sur la circonférence extérieure ou sur la face d'extrémité (3a) du tambour de changement de vitesse (3), et dans lequel les moyens génèrent une résistance mécanique lors de la rotation du tambour de changement de vitesse (3), et dans lequel l'évaluation des écarts de courant ou de tension mesurés s'effectue par l'intermédiaire d'une reconnaissance de formes (21) par un réseau neuronal (21).

2. Procédé selon la revendication 1, **caractérisé en ce que** la reconnaissance de formes est apprise par rotation du tambour de changement de vitesse (3) et par mesure sur la machine électrique (7), dans lequel des grandeurs d'entrée, qui sont relevées à l'arrêt d'un véhicule, sont utilisées.

3. Procédé selon l'une des revendications précédentes, **caractérisé en ce que** la reconnaissance de formes optimise en continu la détermination de la position du tambour de changement de vitesse pendant le fonctionnement.

4. Procédé selon l'une des revendications précédentes, **caractérisé en ce que** l'évaluation des grandeurs d'entrée mesurées s'effectue, après la mesure, dans un intervalle de temps passé.

5. Procédé selon l'une des revendications précédentes, **caractérisé en ce que** les moyens qui génèrent des écarts de courant ou de tension sur la machine électrique (7) d'entraînement sont au moins un moyen de pression qui, par l'intermédiaire d'une force de ressort, presse une bille (2) dans des alésages (4) de la face d'extrémité (3a) ou de la circonférence extérieure du tambour de changement de vitesse (3).
